# EUROPEAN PATENT APPLICATION

(11) **EP 4 843 809 A1**
(43) Date of publication of application: **25.11.2026**
(21) Application number: 26172111.2
(22) Date of filing: 14.04.2026
(51) Int. Cl.: B60K 15/05, B60K 15/07, B60K 15/03, B60K 15/063

(54) **HYDROGEN-ENGINE VEHICLE**

(30) Priority: 22.05.2025 JP 2025085355
(71) Applicant: Toyota Jidosha Kabushiki Kaisha, Toyota-shi, Aichi-ken 471-8571 (JP)
(72) Inventor: NAKAGAKI, Atsushi, Toyota-shi, Aichi-ken, 471-8571 (JP)
(74) Representative: TBK

(57) **Abstract**

A hydrogen-engine vehicle on which a hydrogen engine is mounted includes a hydrogen tank configured to store hydrogen, a hydrogen filling port through which hydrogen is supplied from outside the hydrogen-engine vehicle to the hydrogen tank, a urea-solution tank configured to store urea solution, and a urea-solution filling port through which urea solution is supplied from outside the hydrogen-engine vehicle to the urea-solution tank. The hydrogen filling port and the urea-solution filling port are located on an inner side of a single lid installed on one side surface of the hydrogen-engine vehicle. The hydrogen filling port is disposed above the urea-solution filling port. The hydrogen tank and the urea-solution tank are each located at a portion closer to the one side surface of the hydrogen-engine vehicle on which the lid is installed than another side surface on which the lid is not installed.

## Description

### CROSS-REFERENCE TO RELATED APPLICATIONS

This application is based upon and claims the benefit of priority from Japanese Patent Application No. 2025-085355, filed on May 22, 2025, the entire contents of which are incorporated herein by reference.

### BACKGROUND

### 1. Field

The present disclosure relates to a hydrogen-engine vehicle including a hydrogen engine.

### 2. Description of Related Art

JP2023-19927A discloses a hydrogen-engine vehicle in which a hydrogen tank is disposed in a rear portion of the vehicle.

In the hydrogen engine, nitrogen oxides (NOx) are produced when, during hydrogen combustion, nitrogen and oxygen in the air react with each other. To remove such NOx, a urea-selective catalytic reduction (SCR) system for NOx removal may be installed on the hydrogen-engine vehicle including the hydrogen engine. The hydrogen-engine vehicle provided with the urea-SCR system includes a urea-solution tank that stores urea solution, a urea-solution filling port through which urea solution is supplied from outside the vehicle, and a urea-solution filling pipe that guides, to the urea-solution tank, urea solution introduced through the urea-solution filling port.

If urea solution spilled from the urea-solution filling port adheres to the hydrogen filling port, the sealing performance of the hydrogen filling port may deteriorate due to contamination or corrosion caused by the urea solution.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a hydrogen-engine vehicle on which a hydrogen engine is mounted. The hydrogen-engine vehicle includes a hydrogen tank configured to store hydrogen, a hydrogen filling port through which hydrogen is supplied from outside the hydrogen-engine vehicle to the hydrogen tank, a urea-solution tank configured to store urea solution, and a urea-solution filling port through which urea solution is supplied from outside the hydrogen-engine vehicle to the urea-solution tank. The hydrogen filling port and the urea-solution filling port are located on an inner side of a single lid installed on one side surface of the hydrogen-engine vehicle. The hydrogen filling port is disposed above the urea-solution filling port. The hydrogen tank and the urea-solution tank are each located at a portion closer to the one side surface of the hydrogen-engine vehicle on which the lid is installed than another side surface on which the lid is not installed.

Other features and aspects will be apparent from the following detailed description, the drawings, and the claims.

### BRIEF DESCRIPTION OF THE DRAWINGS

Fig. 1 is a schematic diagram illustrating the arrangement of a drive system and other components of a hydrogen-engine vehicle according to an embodiment, as viewed from below a vehicle.
Fig. 2 is a schematic diagram illustrating the arrangement of the hydrogen filling port and the urea-solution filling port in the hydrogen-engine vehicle shown in Fig. 1, as viewed from the left side of the vehicle.
Fig. 3 is a perspective view illustrating the hydrogen filling port, the urea-solution filling port, and their surrounding areas in the hydrogen-engine vehicle shown in Fig. 1.
Fig. 4 is a partial perspective view illustrating the internal structure of the center pillar provided with the hydrogen filling port and the urea-solution filling port in the hydrogen-engine vehicle shown in Fig. 1.
Fig. 5 is a cross-sectional view of the center pillar taken along line 5-5 in Fig. 4.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

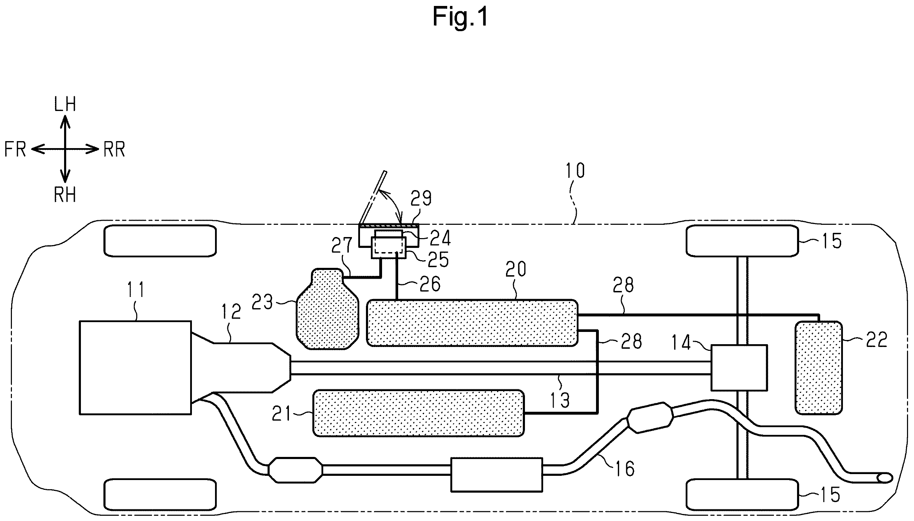

Hereinafter, an embodiment of a hydrogen-engine vehicle will be described in detail with reference to Figs. 1 to 5. In the drawings, "FR" indicates the vehicle frontward direction, "RR" indicates the vehicle rearward direction, "UP" indicates the vehicle upward direction, "DW" indicates the vehicle downward direction, "RH" indicates the vehicle rightward direction, and "LH" indicates the vehicle leftward direction.

### Configuration of Drive System of Hydrogen-Engine Vehicle 10

First, the configuration of a drive system of a hydrogen-engine vehicle 10 of the present embodiment will be described with reference to Fig. 1. The hydrogen-engine vehicle 10 according to the present embodiment has a front-engine, rear-wheel-drive layout. A hydrogen engine 11 is disposed in a front portion of the hydrogen-engine vehicle 10 in a longitudinal orientation. The hydrogen engine 11 is connected to a propeller shaft 13 via a transmission 12. The propeller shaft 13 extends in the vehicle front-rear direction through a central portion of the hydrogen-engine vehicle 10 in the vehicle width direction. The propeller shaft 13 is connected to left and right rear wheels 15 of the hydrogen-engine vehicle 10 via a differential 14. An exhaust pipe 16 is connected to the hydrogen engine 11. The exhaust pipe 16 extends in the vehicle front-rear direction from the front portion, where the hydrogen engine 11 is installed, to the rear end of the hydrogen-engine vehicle 10. The hydrogen engine 11 is provided with a urea-SCR system. The system purifies exhaust gas by selective catalytic reduction using urea solution added to the exhaust gas as a reducing agent.

### Arrangement of Tanks and Filling Ports in Hydrogen-Engine Vehicle 10

As shown in Fig. 1, the hydrogen-engine vehicle 10 includes three hydrogen tanks 20 to 22 that store hydrogen to be combusted by the hydrogen engine 11. The three hydrogen tanks 20 to 22 are installed under the floor of the passenger compartment. The hydrogen tanks 20, 21, and 22 are respectively installed in a left-side portion of a central region of the hydrogen-engine vehicle 10 in the vehicle front-rear direction, a right-side portion of the central region, and a rear portion of the hydrogen-engine vehicle 10. The exhaust pipe 16 of the hydrogen engine 11 extends in the vehicle front-rear direction through a portion located rightward from the hydrogen tank 22 in the vehicle width direction. Further, the hydrogen-engine vehicle 10 includes a urea-solution tank 23 that stores urea solution to be added to the exhaust gas from the hydrogen engine 11. The urea-solution tank 23 is located in front of the hydrogen tank 20 under the floor of the passenger compartment.

The hydrogen-engine vehicle 10 includes a hydrogen filling port 24 through which hydrogen is supplied from the outside of the hydrogen-engine vehicle 10 to the hydrogen tank 20, and a urea-solution filling port 25 through which urea solution is supplied from the outside of the hydrogen-engine vehicle 10 to the urea-solution tank 23. The hydrogen filling port 24 and the urea-solution filling port 25 are located on the inner side of a single lid 29 provided on the left side surface of the hydrogen-engine vehicle 10. The lid 29 is openable and closable, and covers the hydrogen filling port 24 and the urea-solution filling port 25. The hydrogen filling port 24 is connected to the hydrogen tank 20 via a hydrogen filling pipe 26. The urea-solution filling port 25 is connected to the urea-solution tank 23 via a urea-solution filling pipe 27. In Fig. 1, for convenience of illustration, the hydrogen filling port 24 and the urea-solution filling port 25 are shown in positions different from their actual positions.

The hydrogen tanks 21 and 22, other than the hydrogen tank 20, are connected to the hydrogen tank 20 through hydrogen pipes 28. In the hydrogen-engine vehicle 10, the hydrogen tank 20 is directly connected to the hydrogen filling port 24, whereas the remaining hydrogen tanks 21 and 22 are indirectly connected to the hydrogen filling port 24 via the hydrogen tank 20.

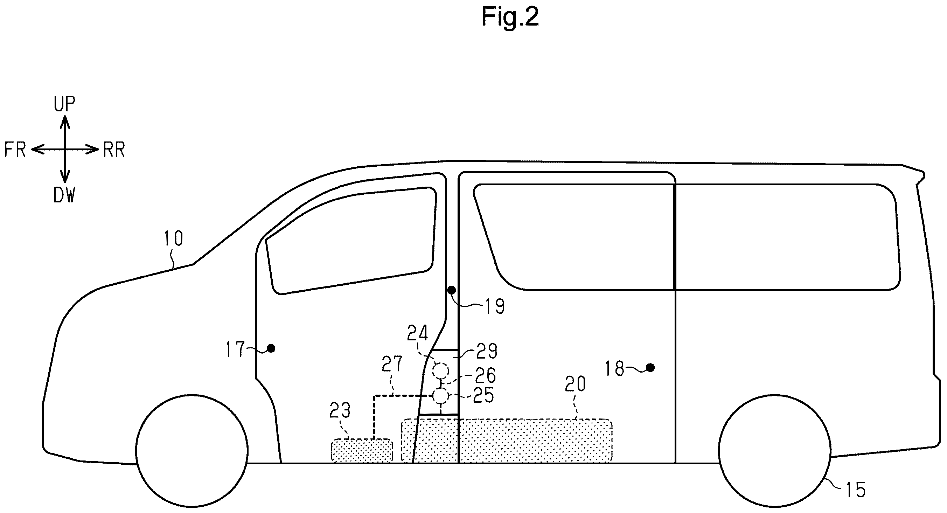

As shown in Fig. 2, a front door 17 and a rear door 18, which is located rearward of the front door 17, are provided on the left side surface of the hydrogen-engine vehicle 10. The lid 29 is installed on a center pillar 19 that is located between the front door 17 and the rear door 18. The center pillar 19 is a structural member provided between the front door 17 and the rear door 18 in the hydrogen-engine vehicle 10.

As shown in Figs. 1 and 2, the lid 29 is located directly beside the hydrogen tank 20, and the urea-solution tank 23 is located in front of the lid 29. Accordingly, in the hydrogen-engine vehicle 10 of the present embodiment, the lid 29 is closer to the hydrogen tank 20 than the urea-solution tank 23. That is, the lid 29 is installed at a position where the distance between the lid 29 and the hydrogen tank 20 is less than the distance between the lid 29 and the urea-solution tank 23. The position of the lid 29 in the vehicle front-rear direction overlaps the position of the hydrogen tank 20 in the vehicle front-rear direction.

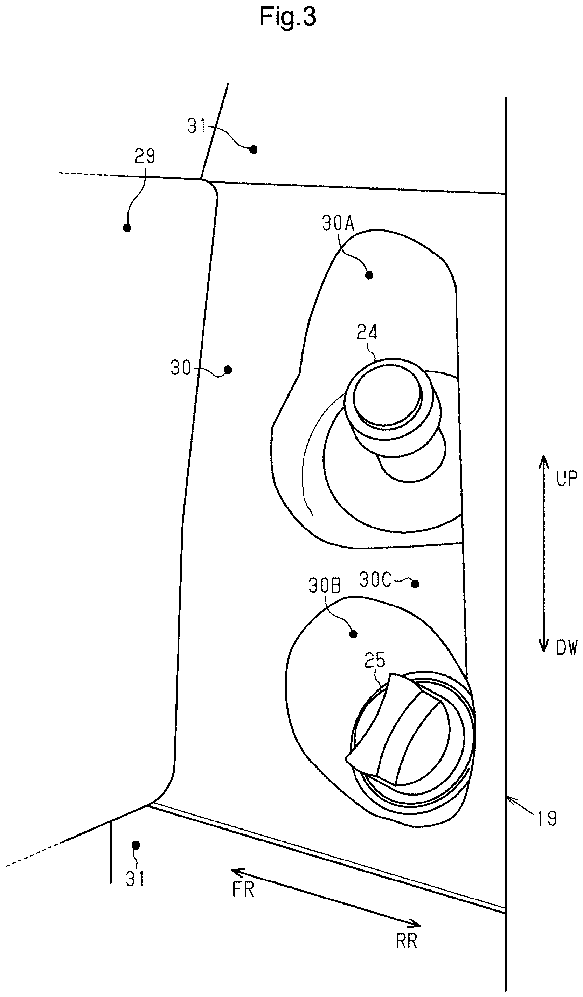

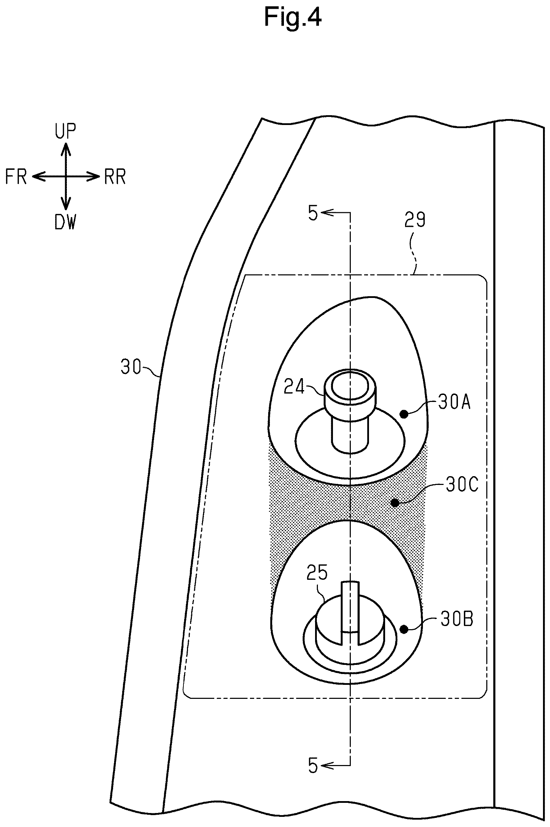

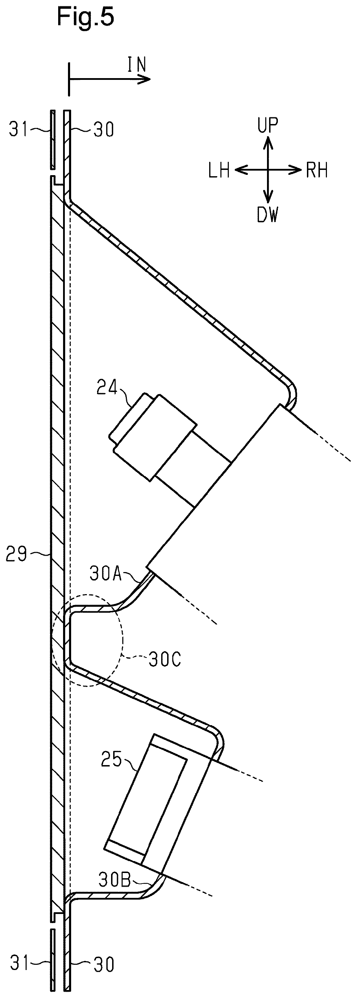

Fig. 3 shows a perspective structure of the hydrogen filling port 24 and the urea-solution filling port 25, with the lid 29 open. As shown in Fig. 3, on the inner side of the lid 29, the hydrogen filling port 24 is located above the urea-solution filling port 25. In Fig. 3 and in Figs. 4 and 5, which will be described later, the hydrogen filling port 24 and the urea-solution filling port 25 are shown with their caps attached.

Fig. 4 is a partial perspective view showing the internal structure of the center pillar 19 at the location where the hydrogen filling port 24 and the urea-solution filling port 25 are installed. Fig. 5 is a cross-sectional view of the center pillar 19 taken along line 5-5 in Fig. 4. The center pillar 19 includes a frame member 30 and an outer plate panel 31 located outside the frame member 30. The lid 29 is installed in an opening formed in a portion of the outer plate panel 31 around the hydrogen filling port 24 and the urea-solution filling port 25. The frame member 30 includes portions 30A and 30B that are located around the hydrogen filling port 24 and the urea-solution filling port 25, respectively, and recessed toward a vehicle inner side IN. In the following description, the portions of the frame member 30 in which the hydrogen filling port 24 and the urea-solution filling port 25 are provided and which are recessed toward the vehicle inner side IN are referred to as filling port mounting portions 30A and 30B. As shown in Fig. 5, with the lid 29 closed, the two filling port mounting portions 30A and 30B are separated from each other. That is, the portion of the frame member 30 between the filling port mounting portions 30A and 30B has a partition wall 30C that separates the hydrogen filling port 24 from the urea-solution filling port 25.

### Operation of the Embodiment

The hydrogen filling port 24 and the urea-solution filling port 25 of the hydrogen-engine vehicle 10 are located on the inner side of a single lid 29, which is installed on the left side surface. Hydrogen supplied through the hydrogen filling port 24 is delivered to the hydrogen tank 20 through the hydrogen filling pipe 26. Hydrogen is distributed from the hydrogen tank 20 to the remaining two hydrogen tanks 21 and 22 through the hydrogen pipe 28. The urea solution supplied through the urea-solution filling port 25 is delivered to the urea-solution tank 23 through the urea-solution filling pipe 27.

### Advantages of the Embodiment

The hydrogen-engine vehicle 10 of the present embodiment provides the following advantages.
(1) The hydrogen-engine vehicle 10 having the hydrogen engine 11 includes the hydrogen tank 20, which stores hydrogen, and the hydrogen filling port 24, through which hydrogen is supplied from the outside of the hydrogen-engine vehicle 10 to the hydrogen tank 20. Further, the hydrogen-engine vehicle 10 includes the urea-solution tank 23, which stores urea solution, and the urea-solution filling port 25, through which urea solution is supplied from the outside of the hydrogen-engine vehicle 10 to the urea-solution tank 23. The hydrogen filling port 24 and the urea-solution filling port 25 are located on the inner side of a single lid 29, which is provided on the left side surface of the hydrogen-engine vehicle 10. The hydrogen tank 20 and the urea-solution tank 23 are installed at the portion of the hydrogen-engine vehicle 10 closer to the left side surface, where the lid 29 is installed, in the vehicle width direction. That is, the hydrogen tank 20 and the urea-solution tank 23 are each located at a portion closer to one side surface of the hydrogen-engine vehicle 10 on which the lid 29 is installed than another side surface on which the lid 29 is not installed. This shortens the hydrogen filling pipe 26, which connects the hydrogen filling port 24 to the hydrogen tank 20, and the urea-solution filling pipe 27, which connects the urea-solution filling port 25 to the urea-solution tank 23. As a result, the installation space for the hydrogen filling pipe 26 and the urea-solution filling pipe 27 decreases, thereby increasing the capacity of the hydrogen tanks 20 to 22. Thus, the hydrogen-engine vehicle 10 of the present embodiment increases the installable capacity of the hydrogen tanks 20 to 22.
(2) The hydrogen filling port 24 and the urea-solution filling port 25 are located on the inner side of a single lid 29. This configuration uses fewer filling-port-related components and requires less installation space than a configuration in which the hydrogen filling port 24 and the urea-solution filling port 25 are located on the inner sides of different lids..
(3) To prevent hydrogen from leaking outside when hydrogen is supplied to the hydrogen-engine vehicle 10, the hydrogen filling port 24 is required to have a relatively high sealing performance. If urea solution spilled from the urea-solution filling port 25 adheres to the hydrogen filling port 24, at least metal components of the hydrogen filling port 24 may become contaminated or corroded. Due to the contamination or corrosion, the sealing performance of the hydrogen filling port 24 may deteriorate. In the hydrogen-engine vehicle 10 of the present embodiment, on the inner side of the lid 29, the hydrogen filling port 24 is located above the urea-solution filling port 25. Most of the urea solution spilled from the urea-solution filling port 25 drips downward. Since the hydrogen filling port 24 is located above the urea-solution filling port 25, urea solution is less likely to adhere to the hydrogen filling port 24 even when both filling ports are located on the inner side of a single lid 29. This limits contamination and corrosion of the hydrogen filling port 24 that would result from urea solution spilled from the urea-solution filling port 25.
(4) In general, the urea-solution tank 23 has a smaller size than the hydrogen tank 20. In the hydrogen-engine vehicle 10 of the present embodiment, the urea-solution tank 23, which has a smaller size, is disposed in front of the hydrogen tank 20, which has a larger size. The installation space for tanks and other components is provided under the floor of the passenger compartment more easily than in the front portion of the hydrogen-engine vehicle 10, which is relatively near the hydrogen engine 11 and the transmission 12. Accordingly, an increase in the capacity of the hydrogen tank 20 is facilitated.
(5) The hydrogen-engine vehicle 10 is a front-engine vehicle in which its front portion includes the hydrogen engine 11. In the urea SCR system, urea solution needs to be added to a portion of the exhaust pipe 16 relatively near the hydrogen engine 11. In the hydrogen-engine vehicle 10 of the present embodiment, the urea-solution tank 23 is disposed in front of the hydrogen tank 20. This reduces the distance between the urea-solution tank 23 and a portion of the exhaust pipe 16 where urea solution is added. As a result, such a configuration shortens the pipe through which urea solution is supplied from the urea-solution tank 23 to the portion where urea solution is added.
(6) The hydrogen filling port 24 and the urea-solution filling port 25 are located on the inner side of the lid 29, and the lid 29 is provided at a portion of the center pillar 19 between the front door 17 and the rear door 18 in the vehicle front-rear direction. This reduces the distance between the hydrogen filling port 24 and the hydrogen tank 20, thereby shortening the hydrogen filling pipe 26.
(7) In general, the urea-solution tank 23 is plastic. Since a plastic tank is less heat-resistant than a metal one, if it is disposed relatively near the exhaust pipe 16 through which high-temperature exhaust gas flows, the tank may deteriorate due to heat. In the hydrogen-engine vehicle 10 of the present embodiment, the exhaust pipe 16 of the hydrogen engine 11 is located closer to the side surface on which the lid 29 is not installed than the side surface on which the lid 29 is installed. Thus, the urea-solution tank 23 is located away from the exhaust pipe 16, which can cause thermal deterioration.
(8) The partition wall 30C is provided between the hydrogen filling port 24 and the urea-solution filling port 25. Since the hydrogen filling port 24 and the urea-solution filling port 25 are separated from each other by the partition wall 30C, the adhesion of the urea water to the hydrogen filling port 24 is limited more effectively.
(9) Because the hydrogen filling pipe 26, which conveys lowtemperature, high-pressure hydrogen, needs to have strength and lowtemperature resistance, the hydrogen filling pipe 26 has a greater weight per unit length and a higher cost per unit length than the urea-solution filling pipe 27. In the present embodiment, the hydrogen filling port 24 and the urea-solution filling port 25 are located on the inner side of the lid 29, and the lid 29 is installed in a portion on the side surface of the hydrogen-engine vehicle 10 that is closer to the hydrogen tank 20 than the urea-solution tank 23. This shortens the hydrogen filling pipe 26, thereby reducing the total cost and total weight of the hydrogen filling port 24 and the urea-solution filling port 25.

### Modifications

The above embodiment may be modified as described below. The above embodiment and the following modifications can be combined as long as the combined modifications remain technically consistent with each other.

Arrangement of Hydrogen Filling Port 24 and Urea-Solution Filling Port 25

In the hydrogen-engine vehicle 10 of the above embodiment, the hydrogen filling port 24 and the urea-solution filling port 25 are aligned in the up-down direction of the vehicle body. Instead, the hydrogen filling port 24 and the urea-solution filling port 25 may be offset from each other in the vehicle front-rear direction as long as the hydrogen filling port 24 is arranged above the urea-solution filling port 25.

### Arrangement of Lid 29

In the hydrogen-engine vehicle 10 of the above embodiment, the lid 29 is provided on the center pillar 19, and the hydrogen filling port 24 and the urea-solution filling port 25 are located on the inner side of the lid 29. That is, the lid 29 is installed in the portion between the front door 17 and the rear door 18 in the vehicle front-rear direction on the left side surface of the hydrogen-engine vehicle 10. Instead, the lid 29 may be installed in a portion, other than the above portion, on the left or right side surface of the hydrogen-engine vehicle 10. For example, the lid 29 may be installed in a portion provided between the front door 17 and the rear door 18 on the right side surface. Alternatively, the lid 29 may be located frontward from the front door 17 or rearward from the rear door 18 on the left or right side surface.

### Arrangement of Tanks

To obtain the above advantage (1), the hydrogen tank 20 connected to the hydrogen filling port 24 via the hydrogen filling pipe 26 needs to be located closer to the side surface on which the lid 29 is installed than the side surface on which the lid 29 is not installed. However, the installation positions of the hydrogen tanks 21 and 22, which are not directly connected to the hydrogen filling port 24, may be changed.

As long as one or more hydrogen tanks are installed at positions closer to the side surface where the lid 29 is installed than the side surface where the lid 29 is not installed, the number of hydrogen tanks provided in the hydrogen-engine vehicle 10 may be changed.

As long as the hydrogen tank 20 and the urea-solution tank 23 are closer to the side surface of the hydrogen-engine vehicle 10 where the lid 29 is installed than the side surface where the lid 29 is not installed, the positions of the hydrogen tank 20 and the urea-solution tank 23 may be changed.

The urea-solution tank 23 does not have to be located in front of the hydrogen tank 20.

### Others

The tank and filling-port layout according to the above embodiment and modifications is also applicable to vehicles having an engine layout other than a front-engine configuration.

The configuration of the drive system of the hydrogen-engine vehicle 10 may be changed. For example, the hydrogen-engine vehicle 10 may be a hybrid electric vehicle that includes a drive motor in addition to the hydrogen engine 11.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hydrogen-engine vehicle (10) on which a hydrogen engine (11) is mounted, the hydrogen-engine vehicle (10) comprising:
a hydrogen tank (20) configured to store hydrogen;
a hydrogen filling port (24) through which hydrogen is supplied from outside the hydrogen-engine vehicle (10) to the hydrogen tank (20);
a urea-solution tank (23) configured to store urea solution; and
a urea-solution filling port (25) through which urea solution is supplied from outside the hydrogen-engine vehicle (10) to the urea-solution tank (23), wherein
the hydrogen filling port (24) and the urea-solution filling port (25) are located on an inner side of a single lid (29) installed on one side surface of the hydrogen-engine vehicle (10),
the hydrogen filling port (24) is disposed above the urea-solution filling port (25), and
the hydrogen tank (20) and the urea-solution tank (23) are each located at a portion closer to the one side surface of the hydrogen-engine vehicle (10) on which the lid (29) is installed than another side surface on which the lid (29) is not installed.

2. The hydrogen-engine vehicle (10) according to claim 1, wherein
a partition wall (30C) is provided between the hydrogen filling port (24) and the urea-solution filling port (25).

3. The hydrogen-engine vehicle (10) according to claim 1 or 2, wherein
the one side surface of the hydrogen-engine vehicle (10) on which the lid (29) is installed is provided with a front door and a rear door located rearward of the front door, and the lid (29) is installed at a portion between the front door and the rear door in a vehicle front-rear direction.

4. The hydrogen-engine vehicle (10) according to any one of claims 1 to 3, wherein
the hydrogen-engine vehicle (10) is a front-engine vehicle.

5. The hydrogen-engine vehicle (10) according to any one of claims 1 to 4, wherein
the lid (29) is installed at a position on the one side surface where a distance between the lid (29) and the hydrogen tank (20) is less than a distance between the lid (29) and the urea-solution tank (23).

6. The hydrogen-engine vehicle (10) according to any one of claims 1 to 5, further comprising:
a hydrogen filling pipe (26) that connects the hydrogen filling port (24) to the hydrogen tank (20); and
a urea-solution filling pipe (27) that connects the urea-solution filling port (25) to the urea-solution tank (23), wherein
a position of the lid (29) in a vehicle front-rear direction overlaps a position of the hydrogen tank (20) in the vehicle front-rear direction.
